# EUROPÄISCHE PATENTSCHRIFT

(11) **EP 3 092 134 B1**
(45) Veröffentlichungstag und Bekanntmachung des Hinweises auf die Patenterteilung: **18.04.2018**
(21) Anmeldenummer: 15700266.8
(22) Anmeldetag: 02.01.2015
(51) Int. Cl.: B60B 7/00, B60B 7/04, B60B 7/06, B60B 7/08, B60B 7/14

(54) **ZIERBLENDE FÜR EIN KRAFTFAHRZEUGRAD, INSBESONDERE FÜR EIN LEICHTMETALLRAD, SOWIE VERFAHREN ZUR BEFESTIGUNG EINER ZIERBLENDE AN EINEM KRAFTFAHRZEUGRAD**
DECORATIVE COVER FOR A MOTOR VEHICLE WHEEL, IN PARTICULAR FOR A LIGHT METAL WHEEL, AND METHOD FOR FASTENING A DECORATIVE COVER TO A MOTOR VEHICLE WHEEL
ENJOLIVEUR POUR ROUE DE VÉHICULE AUTOMOBILE, EN PARTICULIER POUR ROUE EN MÉTAL LÉGER, ET PROCÉDÉ PERMETTANT LA FIXATION D'UN ENJOLIVEUR SUR UNE ROUE DE VÉHICULE AUTOMOBILE

(30) Priorität: 10.01.2014 DE 102014000089
(43) Veröffentlichungstag der Anmeldung: 16.11.2016
(73) Patentinhaber: Andresen, Leon, 24819 Haale (DE)
(72) Erfinder: ANDRESEN, Dierk, 24819 Haale (DE)
(74) Vertreter: Thomas, Götz
(86) Internationale Anmeldenummer: PCT/EP2015/000001
(87) Internationale Veröffentlichungsnummer: WO 2015/104213

(56) Entgegenhaltungen:
- WO-A1-2013/005008
- DE-A1- 10 100 899
- DE-U1- 8 534 757
- US-A- 4 544 209

## Beschreibung

Die vorliegende Erfindung betrifft eine Zierblende für ein Kraftfahrzeugrad gemäß dem Oberbegriff des Anspruchs 1, insbesondere für ein Leichtmetallrad, sowie ein Verfahren zur Befestigung einer Zierblende an einem Kraftfahrzeugrad, insbesondere an einem Leichtmetallrad, gemäß dem Oberbegriff des Anspruchs 13.

Zierblenden oder Zierkappen für Kraftfahrzeugräder werden bisher nahezu ausschließlich an Stahlrädern angebracht bzw. sind zur Anbringung an Stahlrädern bestimmt. Diese Zierblenden oder Zierkappen weisen im Allgemeinen einen randseitigen Spannmechanismus auf, mit dem sie am Felgenhorn der Felge des Rades verspannt werden. Demgegenüber sind Zierblenden oder Zierkappen für Räder aus Leichtmetalllegierungen bisher unüblich.

Von Seiten vieler Kraftfahrzeugbesitzer besteht der Wunsch, ihre Zugehörigkeit zu einer bestimmten Personengruppe, wie zum Beispiel zu den Fans eines bestimmten Fußballclubs oder einer Nationalmannschaft während einer Europa- oder Weltmeisterschaft dadurch auszudrücken, dass sie an ihrem Kraftfahrzeug ein oder mehrere Embleme anbringen, die diese Zugehörigkeit zum Ausdruck bringen, beispielsweise das Vereinswappen des Fußballclubs oder die Nationalfarben der Nationalmannschaft. Diese Zugehörigkeit wird bisher zumeist durch am Kraftfahrzeug angebrachte Fahnen oder Wimpel ausgedrückt, jedoch eignen sich dazu grundsätzlich auch die Zierblenden oder Zierkappen von Kraftfahrzeugrädern. Dies setzt allerdings voraus, dass zum einen die Kosten der mit einem Vereinswappen oder Nationalfarben verzierten Zierblenden nicht übermäßig hoch sind und dass sich zum anderen die mit dem Vereinswappen oder den Nationalfarben verzierten Zierblenden schnell und einfach montieren und demontieren lassen, so dass sie sich zum Beispiel vor der Teilnahme des Fußballclubs oder der Nationalmannschaft an einer Champions-League bzw. einer Weltmeisterschaft schnell und leicht anbringen und nach dem Ende der Teilnahme ebenso schnell und leicht wieder abnehmen lassen. Außerdem sollte sich die Zierblende an unterschiedliche Radformen anpassen lassen und darüber hinaus an der Sicht- oder Außenseite der Zierblende eine größere geschlossene, d.h. nicht durch Löcher für Radschrauben oder durch Lüftungsschlitze unterbrochene Oberfläche zur Verfügung stellen, die sich zur Anbringung eines größeren Vereinswappens, der Nationalfarben oder auch eines anderen gewünschten Logos eignet, wie zum Beispiel eines Firmenlogos auf den Zierblenden eines Kundendienstfahrzeugs.

Aus der DE 101 00 899 A1 ist bereits eine Zierblende der eingangs genannten Art bekannt, die zur Vereinfachung der Demontage aus einem Befestigungselement und einem Blendenteil besteht. Das Befestigungselement wird vor der Anbringung des Blendenteils lösbar in einer zylindrischen Ausnehmung des Rades verrastet, bevor ein Arretierstift des Blendenteils mit einer Kulissenbahn des Befestigungselements in Eingriff gebracht wird, so dass sich der Blendenteil durch Andrücken gegen das Rad demontieren lässt. Die bekannte Zierblende ist jedoch nicht für Kraftfahrzeugräder aus Leichtmetall bestimmt und lässt sich nur schwer an unterschiedliche Radformen und Raddurchmesser anpassen.

Ausgehend hiervon liegt der Erfindung die Aufgabe zugrunde, eine Zierblende der eingangs genannten Art bereitzustellen, die sich schnell und einfach an Kraftfahrzeugrädern, insbesondere an Kraftfahrzeugrädern aus Leichtmetall, montieren und wieder demontieren und dabei auch an unterschiedliche Radformen und Raddurchmesser anpassen lässt und mit einer größeren geschlossenen Oberfläche versehen werden kann.

Weiter liegt der Erfindung die Aufgabe zugrunde, ein Verfahren der eingangs genannten Art bereitzustellen, das eine schnelle und einfache nahezu werkzeuglose Montage und Demontage sowie eine Anpassung der Zierblende an unterschiedliche Radformen und Raddurchmesser von Kraftfahrzeugrädern, insbesondere von Kraftfahrzeugrädern aus Leichtmetall gestattet.

Die zuerst genannte Aufgabe wird erfindungsgemäß durch die Merkmale des Anspruchs 1 gelöst, während die zuletzt genannte Aufgabe erfindungsgemäß durch die Merkmale des Anspruchs 13 gelöst wird.

Der Erfindung liegt die Erkenntnis zugrunde, dass sämtliche Kraftfahrzeug-Leichtmetallräder aus fertigungstechnischen Gründen eine zentrale, zur Drehachse des Rades koaxiale durchgehende Mitten- oder Nabenbohrung aufweisen. Diese Bohrung ist an der Sicht- oder Außenseite der Räder gewöhnlich durch einen runden Deckel verschlossen, der einen dem Durchmesser der Bohrung entsprechenden Durchmesser aufweist, in der Bohrung verrastet ist und häufig ein Logo des Kraftfahrzeugherstellers trägt. Da diese Mittenbohrungen bei allen Leichtmetallrädern trotz einer Vielzahl von unterschiedlichen Radformen nur eine geringe Anzahl von unterschiedlichen Abmessungen, d.h. Längen und Durchmessern bzw. unterschiedlichen Rastmechanismen für den Deckel aufweisen, lassen sie sich gut zur lösbaren Befestigung der Zierblende nutzen, indem das Befestigungselement der Zierblende nach dem Entfernen des Deckels auf dieselbe Weise wie der Deckel lösbar in der Naben- oder Mittenbohrung verrastet wird.

Durch die lösbare Verbindung zwischen dem Befestigungselement und dem Blendenelement der Zierblende kann die Zierblende zudem leicht an unterschiedliche Raddurchmesser angepasst werden, indem ein zur Naben- oder Mittenöffnung des Rades passendes und in der Mittenöffnung verrastbares Befestigungselement mit einem an den jeweiligen Raddurchmesser angepassten Blendenelement kombiniert wird.

Durch das zur Drehachse des Rades koaxiale Gewinde an der Innenseite des Blendenelements und das komplementäre Gewinde des Befestigungselements kann die Zierblende außerdem leicht an unterschiedliche Radformen angepasst werden, insbesondere an unterschiedlich stark nach außen gewölbte Radsterne oder Radschüsseln, indem die Gewinde miteinander verschraubt werden, bis das Blendenelement zum Beispiel im Bereich des Felgenhorns oder des Radsterns bzw. der Radschüssel gegen die Sicht- oder Außenseite des Rades anschlägt.

Da das Gewinde des Blendenelements an dessen Innenseite angebracht ist, kann das Blendenelement darüber hinaus an seiner Sicht- oder Außenseite mit einer größeren geschlossenen Oberfläche versehen werden, welche die Anbringung einer relativ großen und damit gut sichtbaren aufgedruckten oder aufgeklebten Darstellung gestattet. Eine bevorzugte Ausgestaltung der Erfindung sieht dabei vor, dass sich die geschlossene äußere Oberfläche des Blendenelements von der Drehachse aus radial nach außen über mindestens drei Viertel des Radius des Rades oder der Zierblende erstreckt und dass nur in der Nähe des äußeren Randes des Blendenelements Lüftungsschlitze im Blendenelement vorgesehen sind, durch die Luft zu einer Bremsscheibe des Rades zugeführt werden kann.

Die beiden komplementären Gewinde am Blendenelement und am Befestigungselement der Zierblende umfassen ein Außengewinde und ein Innengewinde, die sich miteinander in Gewindeeingriff bringen lassen. Von den beiden Gewinden ist das Außengewinde zweckmäßig am Blendenelement vorgesehen, während das Innengewinde vorzugsweise am Befestigungselement ausgebildet ist. Jedoch ist auch eine umgekehrte Anordnung möglich.

Um zu verhindern, dass sich die miteinander verschraubten Gewinde des Befestigungselements und des Blendenelements nach dem Anschlagen des Blendenelements gegen die Sicht- oder Außenseite des Rades wieder voneinander lösen, umfasst die Zierblende gemäß einer weiteren bevorzugten Ausgestaltung der Erfindung Mittel zum Blockieren der miteinander verschraubten Gewinde in Bezug zueinander. Diese Mittel umfassen vorteilhaft eine Schraube, insbesondere eine Madenschraube, die bevorzugt von außen her in eine Gewindebohrung des mit dem Innengewinde versehenen Elements eingeschraubt wird, bis ihr inneres Ende durch das Innengewinde hindurch gegen das Außengewinde angepresst wird. Diese Art der Blockierung hat zum einen den Vorteil, dass nach dem Lösen des Befestigungselements aus der Verrastung mit der Mittenbohrung die Schraube leicht zugänglich ist. Zum anderen ist diese Art der Blockierung reversibel und kann wieder gelöst oder aufgehoben werden, um die Zierblende an ein Kraftfahrzeugrad mit einer anderen Radform anzupassen.

Dort, wo das Gewinde des Blendenelements als Außengewinde ausgebildet ist, ist das Blendenelement zweckmäßig an seiner Innenseite mit einem über die Mitte des Blendenelements überstehenden Gewindebolzen versehen, der das Außengewinde trägt. In diesem Fall weist das Befestigungselement vorteilhaft eine zur Drehachse des Rades koaxiale Innengewindebohrung auf, in die sich der Gewindebolzen einschrauben lässt.

Dort, wo das Gewinde des Blendenelements als Innengewinde ausgebildet ist, ist das Blendenelement zweckmäßig an seiner Innenseite mit einer über die Mitte des Blendenelements überstehenden Gewindebuchse versehen, in der das Innengewinde ausgebildet ist. In diesem Fall weist das Befestigungselement bevorzugt einen Gewindebolzen auf, der das Außengewinde trägt und nach dem Verrasten des Befestigungselements in der Naben- oder Mittenbohrung des Rades koaxial zur Drehachse des Rades über dessen Sicht- oder Außenseite übersteht.

Um die Herstellungskosten der Zierblende so gering wie möglich zu halten, sind das Blendenelement und das Befestigungselement vorzugsweise als Spritzgussteile aus einem thermoplastischen Kunststoff ausgebildet. Dies hat darüber hinaus den Vorteil, dass sich der zur Herstellung des Befestigungselements verwendete Kunststoff im Hinblick auf seine Elastizität so einstellen lässt, dass sich das Befestigungselement leicht in der Naben- oder Mittenbohrung verrasten lässt und trotzdem sicher in dieser festgehalten wird.

Die Gewinde des Blendenelements und des Befestigungselements können entweder während des Spritzgießens der beiden Teile in diese eingeformt oder nachträglich durch eine spanabhebende Bearbeitung ausgebildet werden. Alternativ ist es auch möglich, eines oder beide Gewinde an einem vorgefertigten Gewindeteil auszubilden und dieses beim Spritzgießen des Blendenelements bzw. des Befestigungselements in die verwendete Spritzgussform einzulegen. Diese Vorgehensweise wird insbesondere dann bevorzugt, wenn das Außengewinde an einem über die Innenseite des Blendenelements überstehenden Gewindebolzen vorgesehen ist, der dann als vorgefertigtes Bauteil in eine zur Fertigung des Blendenelements dienende Spritzgussform eingelegt und beim Spritzgießen des Blendenelements einstückig mit diesem verbunden wird. Der vorgefertigte Gewindebolzen wird in diesem Fall zweckmäßig an seinem mit dem Blendenelement verbundenen äußeren Ende mit einer unrunden Erweiterung versehen, die Bohrungen, Einbuchtungen oder Ecken aufweist, um eine drehfeste Verbindung zwischen dem Blendenelement und dem angeformten Gewindebolzen sicherzustellen.

Das Befestigungselement weist vorzugsweise einen in die Naben- oder Mittenbohrung des Rades einführbaren, mit den Rastmitteln versehenen Rastteil und einen einstückig mit dem Rastteil verbundenen, nach außen über die Naben- oder Mittenbohrung überstehenden, mit dem Gewinde versehenen Gewindeteil auf, der zweckmäßig um die Mündung der Naben- oder Mittenbohrung herum gegen die Sicht- oder Außenseite des Rades anliegt, so dass er beim Verschrauben der beiden Gewinde in axialer Richtung unbeweglich festgehalten wird.

Der Rastteil umfasst vorzugsweise einen Kranz von elastisch verformbaren Rastzungen, die axial über den Gewindeteil überstehen und an ihren freien Enden mit radial überstehenden Rastvorsprüngen versehen sind, so dass sie sich mit einer komplementären Rastvertiefung oder Rastnut am inneren Umfang der Naben- oder Mittenöffnung in Rasteingriff bringen lassen.

Dort, wo der Gewindeteil mit einem Innengewinde versehen ist, ist er vorzugsweise ebenfalls als im Querschnitt ringförmige Gewindebuchse ausbildet.

Die Zierblende kann mit einem im Blendenelement angeordneten Schloss versehen werden, das einen Riegel umfasst, der sich durch das Blendenelement und das Befestigungselement hindurch erstreckt und der sich mittels eines Schlüssels zwischen einer Offenstellung und einer Schließstellung verdrehen lässt, wobei er in der Schließstellung zweckmäßig einen die Naben- oder Mittenbohrung umgebenden Teil des Rades hintergreift.

Im Folgenden wird die Erfindung anhand von zwei in der Zeichnung dargestellten Ausführungsbeispielen näher erläutert.
Fig. 1 zeigt eine Vorderseitenansicht eines Leichtmetallrades;

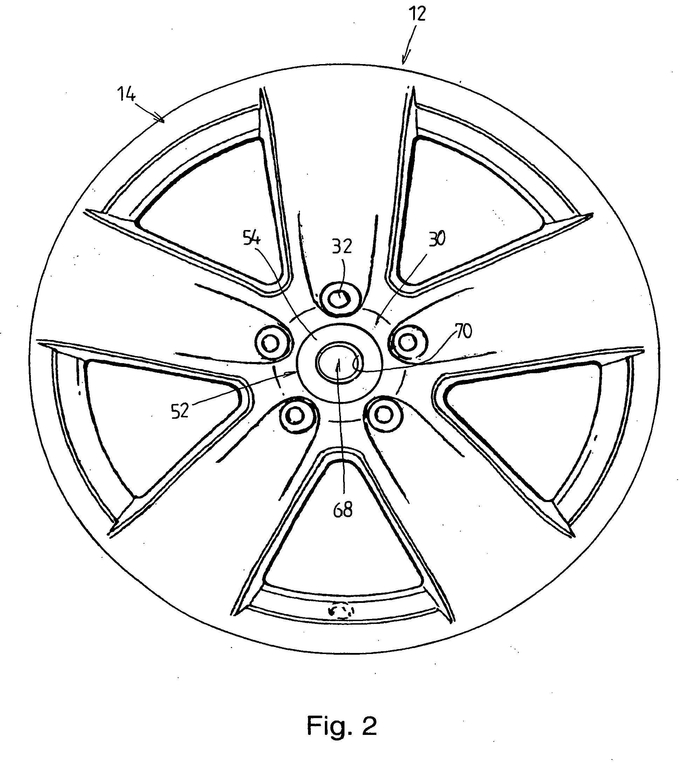

Fig. 2 zeigt eine Ansicht entsprechend Fig. 1, jedoch nach dem Entfernen eines in einer Naben- oder Mittenbohrung des Rades verrasteten Deckels und dem Verrasten eines Befestigungselements einer erfindungsgemäßen Zierblende in der Naben- oder Mittenbohrung;
Fig. 3 zeigt eine Ansicht entsprechend Fig. 1 und 2, jedoch nach der Montage eines Blendenelements am Befestigungselement;
Fig. 4 zeigt eine Innenseitenansicht des Blendenelements der Zierblende;
Fig. 5 zeigt eine etwas vergrößerte Querschnittsansicht des Blendenelements;
Fig. 6 zeigt eine etwas vergrößerte Seitenansicht eines anderen Blendenelements;
Fig. 7 zeigt eine etwas vergrößerte Rückseitenansicht des Befestigungselements;
Fig. 8 zeigt eine etwas vergrößerte Seitenansicht des Befestigungselements;
Fig. 9 zeigt eine etwas vergrößerte Schnittansicht des Befestigungselements entlang der Linie A-A der Fig. 7;
Fig. 10 zeigt eine Schnittansicht des Leichtmetallrades aus Fig. 1;
Fig. 11 zeigt eine Schnittansicht entsprechend Fig. 10, jedoch nach dem Entfernen des Deckels aus der Naben- oder Mittenbohrung;
Fig. 12 zeigt eine Schnittansicht entsprechend Fig. 11, jedoch nach dem Verrasten des Befestigungselements in der Naben- oder Mittenbohrung;
Fig. 13 zeigt eine Schnittansicht entsprechend Fig. 12, jedoch nach dem Verschrauben des Blendenelements mit dem Befestigungselement;
Fig. 14 zeigt eine Schnittansicht entsprechend Fig. 13, jedoch nach dem Entfernen des Befestigungselements aus der Naben- oder Mittenbohrung und beim Blockieren der Verschraubung zwischen dem Blendenelement und dem Befestigungselement.

Die in der Zeichnung dargestellte Zierblende 10 ist zur Montage an einem Rad eines Kraftfahrzeugs bestimmt, bevorzugt an einem gegossenen oder geschmiedeten Leichtmetallrad 12 eines Personenkraftwagens.

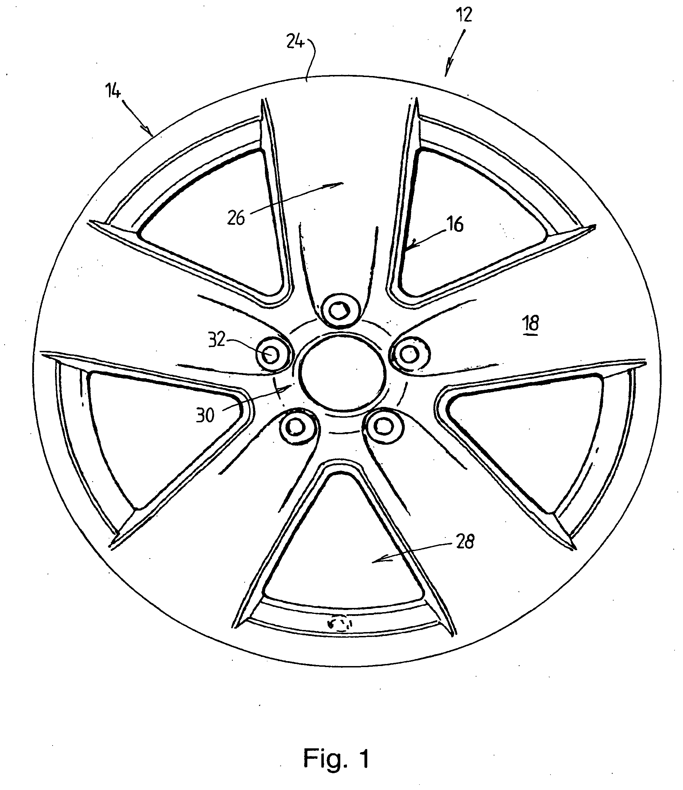

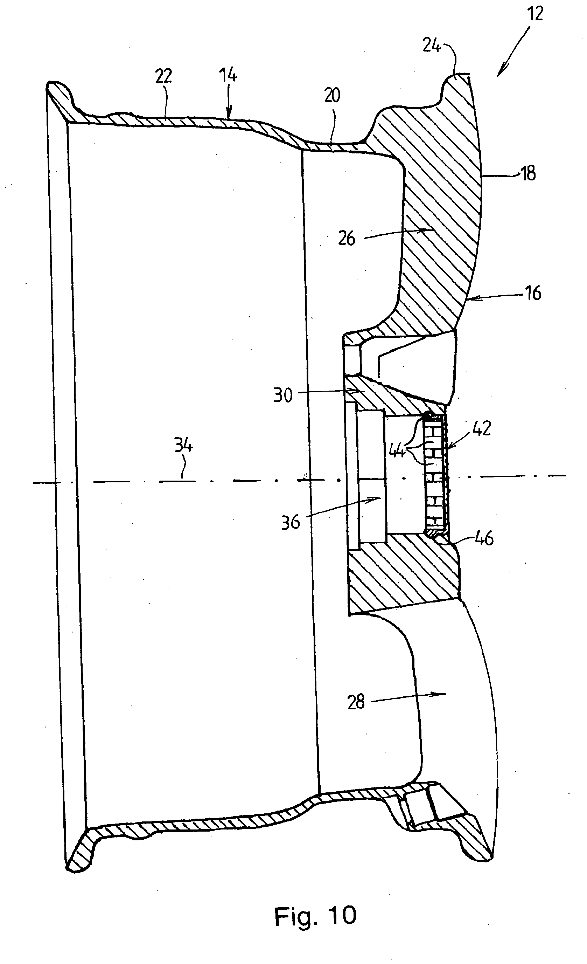

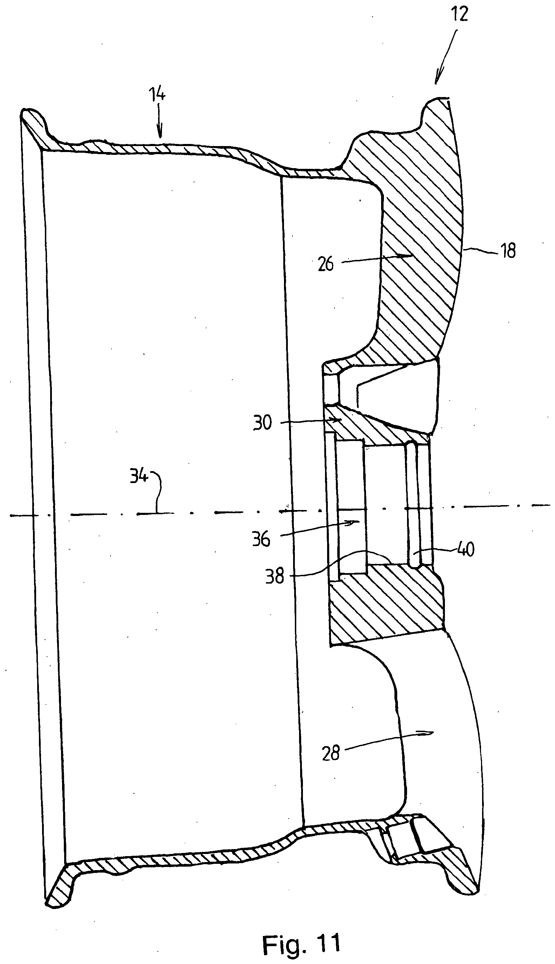

Wie am besten in den Figuren 1 und 10 dargestellt, besteht das in der Zeichnung beispielhaft dargestellte Leichtmetallrad 12 aus einer Felge 14 und einem Radstern 16 und weist eine Sicht- oder Außenseite 18 und eine entgegengesetzte Rückseite auf. Die Felge 14 umfasst ein Felgenbett 20, eine Felgenschulter 22 und ein Felgenhorn 24. Der Radstern 16 umfasst fünf Speichen 26, fünf allgemein dreieckige Luftdurchtrittsöffnungen 28 zwischen den jeweils benachbarten Speichen 26 sowie eine Radnabe 30. Die Radnabe 30 weist fünf Durchgangsbohrungen 32 für Radbolzen auf, mit denen das Rad 12 an einem Radträger des Kraftfahrzeugs befestigt wird. Die Radnabe 30 ist weiter mit einer zur Drehachse 34 des Rades 12 koaxialen Naben- oder Mittenbohrung 36 versehen. Die Naben- oder Mittenbohrung 36 ist eine durchgehende Stufenbohrung, die angrenzend an die Sicht- oder Außenseite 18 des Rades 12 einen Innendurchmesser zwischen 40 und 50 mm besitzt und sich von der Sicht- oder Außenseite 18 weg stufenweise erweitert. In der Nähe ihrer Mündung an der Sicht- oder Außenseite 18 weist die Naben- oder Mittenbohrung 36 in ihrer inneren Umfangsfläche 38 eine vertiefte umlaufende Nut 40 (Fig. 11) mit einem konkav gerundeten Nutquerschnitt auf.

Wie am besten in Fig. 10 dargestellt, dient die Nut 40 zum lösbaren Verrasten eines Verschlussdeckels 42, der die Naben- oder Mittenbohrung 36 an der Sicht- oder Außenseite 18 des Rades 12 verschließt. Der aus Leichtmetall hergestellte Verschlussdeckel 42 weist einen Außendurchmesser auf, der dem Innendurchmesser der Naben- oder Mittenbohrung 36 an der Sicht- oder Außenseite entspricht, und ist an seiner Rückseite mit einer Mehrzahl von axial überstehenden elastisch verformbaren Rastzungen 44 versehen. Die Rastzungen 44 sind konzentrisch um die Drehachse 34 des Rades 12 herum angeordnet und weisen jeweils an ihrem freien Ende einen radial nach außen überstehenden konvex gerundeten Vorsprung 46 auf, dessen Querschnitt allgemein dem Nutquerschnitt entspricht.

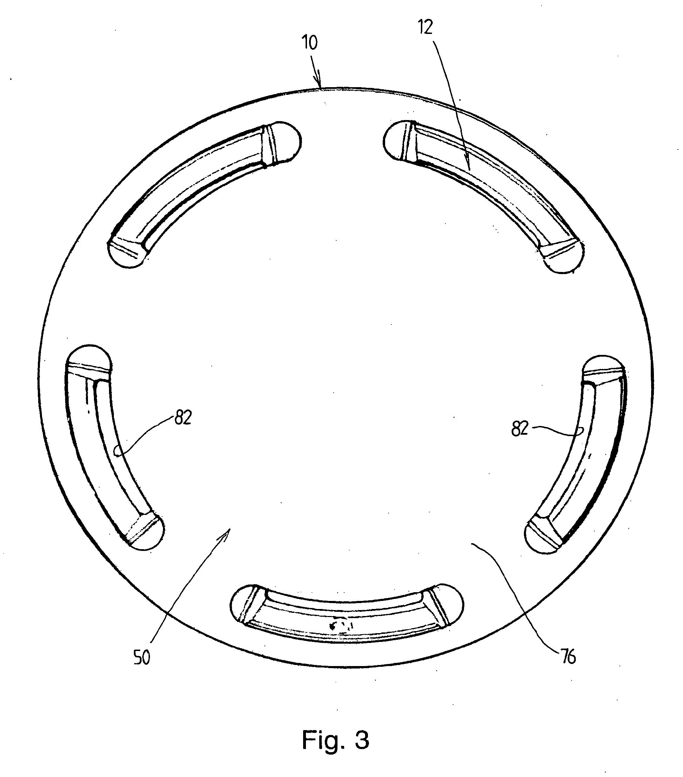

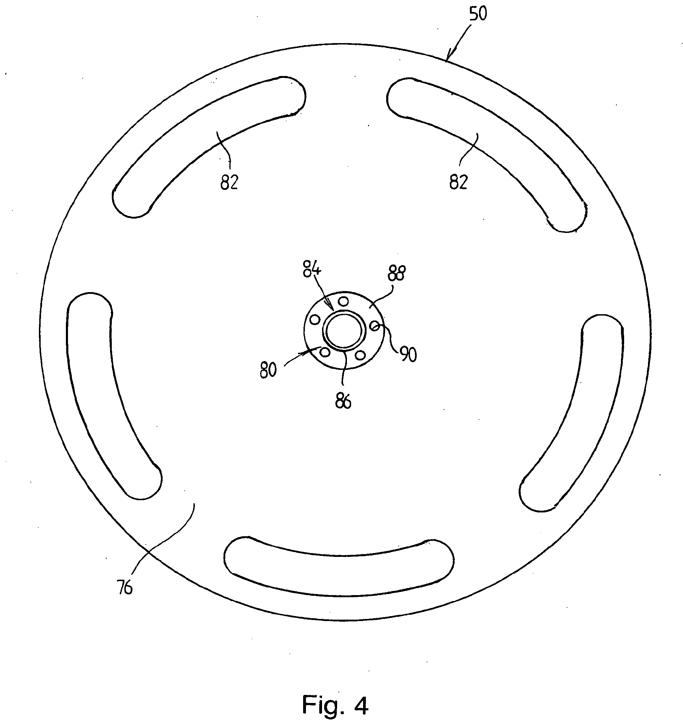

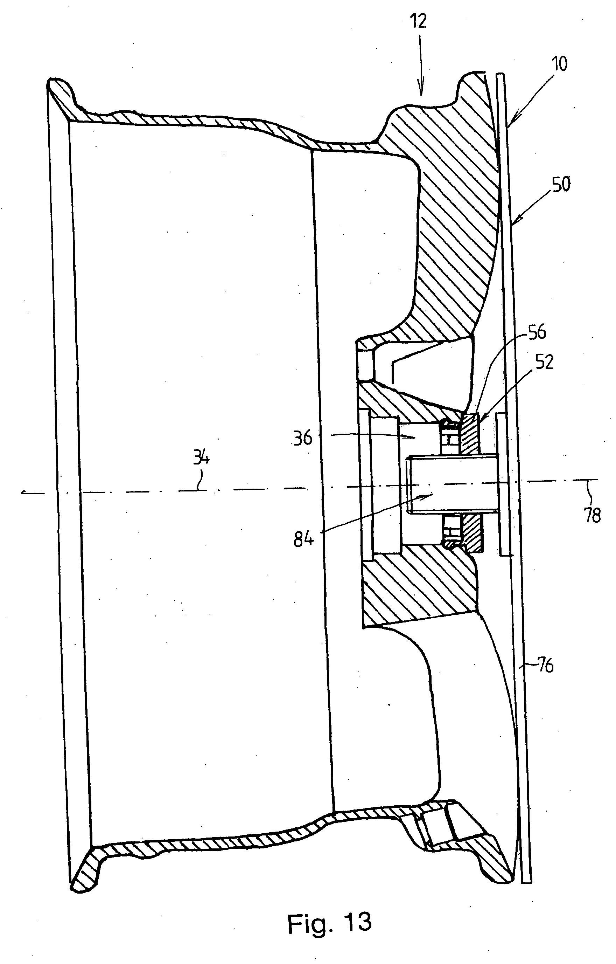

Wie am besten in den Figuren 4 bis 9 sowie 12 bis 14 dargestellt, besteht die Zierblende 10 im Wesentlichen aus zwei separaten Teilen, nämlich einem Befestigungselement 52 und einem Blendenelement 50, die durch eine Schraubverbindung lösbar miteinander verbindbar sind. Das Befestigungselement 52 dient zur Montage der Zierblende 10 am Rad 12, wonach das Blendenelement 50 einen überwiegenden Teil der Sicht- oder Außenseite 18 des Rades 12 verdeckt, wie am besten in Fig. 3 und 13 dargestellt. Sowohl das Befestigungselement 52 als auch das Blendenelement 50 bestehen ganz oder zumindest zum überwiegenden Teil aus thermoplastischem Kunststoff und werden durch Spritzgießen geformt.

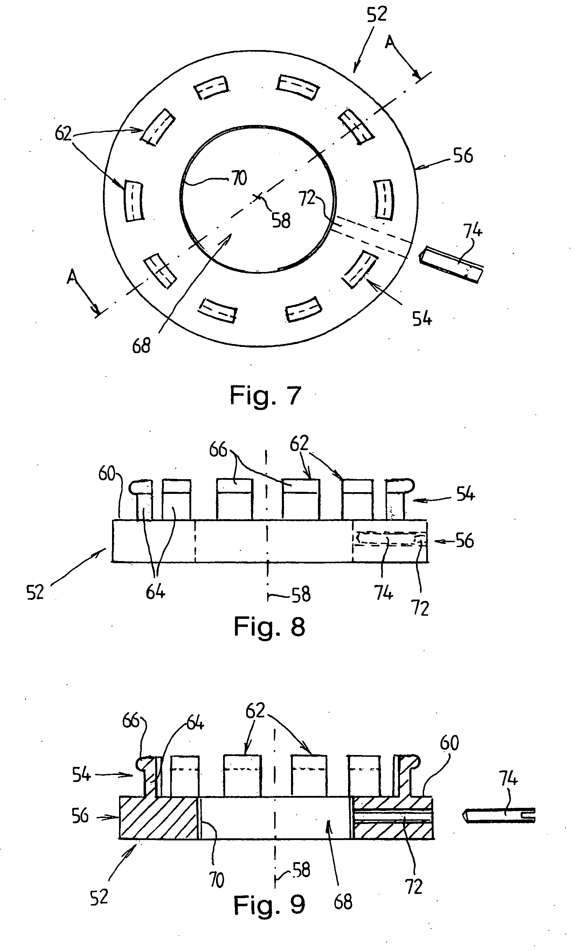

Wie am besten in den Figuren 7 bis 8 dargestellt, besteht das Befestigungselement 52 im Wesentlichen aus einem in die Naben- oder Mittenbohrung 36 des Rades 12 einführbaren ringförmigen Rastteil 54 und einem einstückig und fest mit dem Rastteil 54 verbundenen ringförmigen Gewindeteil 56, die beide eine Mittelachse 58 des Befestigungselements 52 konzentrisch umgeben. Der Rastteil 54 besitzt einen etwas geringeren Außendurchmesser als der Gewindeteil 56 und befindet sich nach der Montage der Zierblende 10 am Rad 12 innerhalb von der Naben- oder Mittenbohrung 36, während der Gewindeteil 56 außerhalb von der Naben- oder Mittenbohrung 36 angeordnet ist und mit einem Teil einer ebenen, der Sicht- oder Außenseite 18 des Rades 10 zugewandten hinteren Stirnfläche 60 gegen einen Mündungsrand der Naben- oder Mittenbohrung 36 anliegt, wie in Fig. 13 dargestellt.

Der Rastteil 54 besteht aus einem Kranz von elastisch verformbaren einzelnen identisch geformten Rastzungen 62, die konzentrisch um die Mittelachse 58 des Befestigungselements 52 herum angeordnet sind. Die Rastzungen 62 stehen axial über die hintere Stirnfläche 60 des Gewindeteils 56 über, wobei der Außendurchmesser des Kranzes geringfügig kleiner als der Innendurchmesser der Naben- oder Mittenbohrung 36 ist. Die Rastzungen 62 bestehen jeweils aus einem Zungenteil 64, dessen zum Gewindeteil 56 benachbarter Fuß am Gewindeteil 56 angeformt ist und dessen freies Ende einen in Bezug zur Mittelachse 58 radial nach außen überstehenden konvex gerundeten Vorsprung 66 trägt. Vom Mündungsrand der Naben- oder Mittenbohrung 36 weisen die Vorsprünge 66 denselben Abstand wie die Nut 40 auf, so dass das Befestigungselement 52 nach dem Verrasten der Rastzungen 62 in der Nut 40 mit seiner hinteren Stirnfläche 60 im Bereich der Radnabe 30 um die Naben- oder Mittenbohrung 36 herum gegen die Sicht- oder Außenseite 18 des Rades 10 anliegt. Der Querschnitt der Vorsprünge 66 entspricht allgemein dem Querschnitt der Nut 40. Die Anzahl der Rastzungen 62, die Querschnittsform und die Querschnittsabmessungen der Zungenteile 64 und der Kunststoff des Befestigungselements 52 sind so aufeinander abgestimmt, dass das Befestigungselement 52 nach dem Verrasten der Rastzungen 62 in der Nut 40 sicher in der Naben- oder Mittenbohrung 36 festgehalten wird. Bei dem Ausführungsbeispiel in den Figuren 7 bis 9 haben die Rastzungen 62 größere Abmessungen als die Rastzungen 44 des Deckels 40, so dass ihre Elastizität und ihr Biegewiderstand trotz des unterschiedlichen Materials mindestens ebenso so groß wie diejenigen der Rastzungen 44 des Deckels 40 sind.

Der Gewindeteil 56 besitzt eine mit einem Innengewinde 70 versehene, zur Mittelachse 58 konzentrische Durchgangsbohrung 68, die nach der Montage in der Naben- oder Mittenbohrung 36 konzentrisch zur Drehachse 34 des Rades 12 ist. Der Gewindeteil 56 ist weiter mit einer radialen Gewindebohrung 72 (Fig. 9) versehen, die sich von einer zylindrischen äußeren Umfangsfläche des Gewindeteils 56 aus radial nach innen bis zur Durchgangsbohrung 68 erstreckt. Die Gewindebohrung 72 dient zur Aufnahme einer Madenschraube 74, die zum Anpassen und Fixieren des Blendenelements 50 dient und deren Funktion nachfolgend im Zusammenhang mit der Montage der Zierblende 10 näher erläutert wird.

Das Blendenelement 50 besteht im Wesentlichen aus einem dünnen scheiben- oder muldenförmigen Verblendungsteil 76 und einem einstückig und drehfest mit dem Verblendungsteil 76 verbundenen Gewindeteil 80, die eine Mittelachse 78 des Blendenelements 50 konzentrisch umgeben.

Der Verblendungsteil 76 besitzt einen Außendurchmesser, der im Wesentlichen dem Außendurchmesser des Felgenhorns 24 des Rades 12 entspricht, so dass er sich nach der Montage der Zierblende 10 am Rad 12 von der Drehachse 34 aus in radialer Richtung bis zum Felgenhorn 24 erstreckt und im Wesentlichen die gesamte Sicht- oder Außenseite 18 des Rades 12 überdeckt.

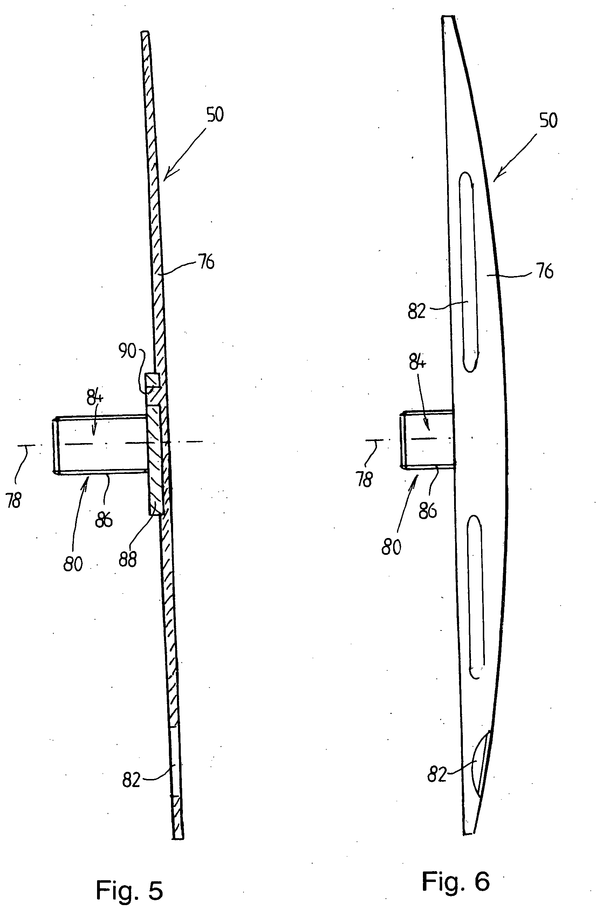

Wie am besten in den Figuren 3 und 5 dargestellt, ist der Verblendungsteil 76 in der Nähe seines äußeren Umfangs mit einem Kranz von durchgehenden gebogenen Schlitzöffnungen 82 versehen, deren Anzahl und Breite vorzugsweise auf die Anzahl und Breite der Öffnungen 28 zwischen den Speichen 26 des Radsterns 16 des Rades 12 abgestimmt ist, an dem die Zierblende 10 montiert werden soll. Die Schlitzöffnungen 82 dienen zur Zufuhr von Luft zum Rad 12 bzw. zu einer im Rad 12 montierten Bremsscheibe und sind ausschließlich in einem an den äußeren Umfang angrenzenden ringförmigen Randstreifen des Verblendungsteils 76 angeordnet, dessen Innenradius mehr als drei Viertel des Radius des äußeren Umfangs des Verblendungsteils 76 beträgt. Auf diese Weise besitzt das Blendenelement 50 radial auswärts von der Drehachse 34 des Rades 12 und radial einwärts von den Schlitzöffnungen 82 des Verblendungsteils 76 eine große geschlossene äußere Oberfläche, die weder durch Löcher für Radschrauben noch durch weitere Lüftungsschlitze unterbrochen ist und sich somit hervorragend zur Anbringung einer auch aus größerer Entfernung noch gut sichtbaren Darstellung eines Vereinswappens, einer Nationalflagge, eines Firmenlogos oder dergleichen eignet. Die Darstellung kann entweder direkt auf die äußere Oberfläche des Verblendungsteils 76 oder auf eine auf diese äußere Oberfläche aufgeklebte Folie aufgedruckt sein.

Die sichtbare äußere Oberfläche des Verblendungsteils 76 kann eben sein, wie bei dem Blendenelement 50 in den Figuren 3 bis 5, oder kann leicht konvex nach außen gewölbt sein, wie bei dem Blendenelement 50 in Fig. 6.

Der Gewindeteil 80 des Blendenelements 50 besteht bei den dargestellten Ausführungsbeispielen aus einem vorgefertigten Gewindebolzen 84, der koaxial zur Mittelachse 78 über die der Sicht- oder Außenseite 18 des Rades 12 gegenüberliegende Innenseite des Blendenelements 50 übersteht und ein zum Innengewinde 70 des Befestigungselements 52 passendes Außengewinde 86 aufweist.

Der vorgefertigte Gewindebolzen 84 wird in eine zur Fertigung des Blendenelements 50 dienende Spritzgussform eingelegt und beim Spritzgießen des Blendenelements 50 einstückig und drehfest mit dem Verblendungsteil 76 verbunden. Zu diesem Zweck weist der aus Polyamid (PA), vorzugsweise PA6 oder Acrylnitril-Butadien-Styrol (ABS) bestehende Gewindebolzen 84 einen flachen Fußteil 88 mit größerem Durchmesser auf, der mehrere axiale Durchgangsbohrungen 90 besitzt, in die beim Spritzgießen des Blendenelements 50 der thermoplastische Kunststoff des Verblendungsteils 76 eindringen und für eine einstückige und drehfeste Verbindung zwischen dem Gewindeteil 80 und dem Verblendungsteil 76 sorgen kann, wie in Fig. 4 und 5 dargestellt. Die Sicht- oder Außenseite des Blendenelements 50 wird vollständig vom thermoplastischen Kunststoff des Verblendungsteils 76 gebildet.

Im Folgenden wird die Montage der Zierblende 10 an dem in der Zeichnung beispielhaft dargestellten Rad 12 unter Bezugnahme auf die Figuren 10 bis 14 näher erläutert:
Vor der Montage der Zierblende 10 muss zuerst der in Fig. 10 dargestellte, in der Naben- oder Mittenbohrung 36 verrastete Deckel 42 entfernt werden, was vorzugsweise durch Unterdruck erfolgt, indem der Saugnapf eines Gummisaugers auf die Außenseite des Deckel 42 gedrückt und der Deckel 42 nach dem Festsaugen des Saugnapfs durch Zug am Sauger herausgezogen wird.

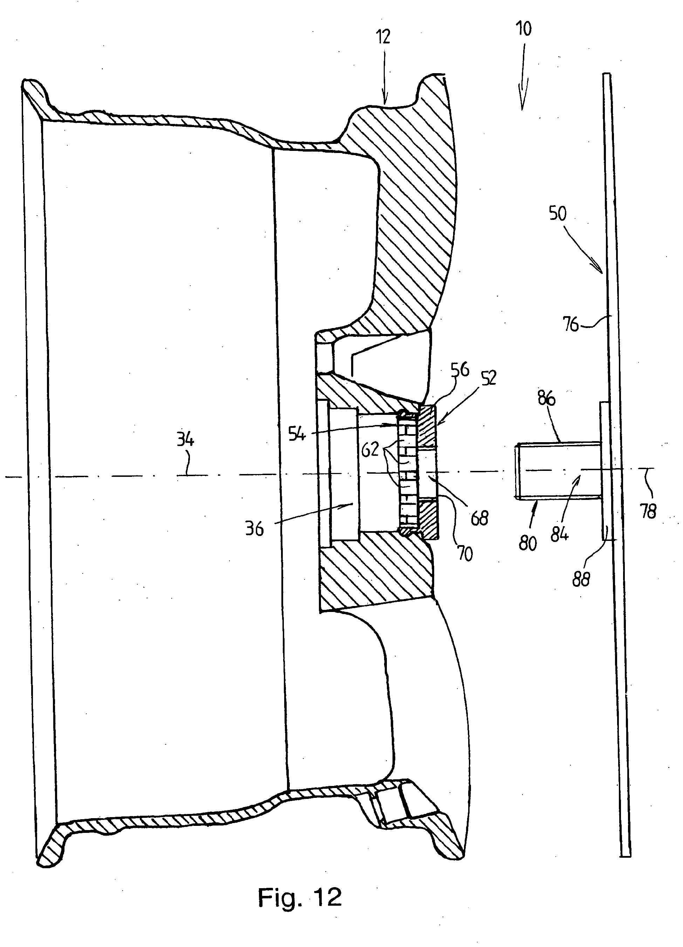

Nach dem Entfernen des Deckels 42 ist die Naben- oder Mittenbohrung 36 frei zugänglich, wie in Fig. 11 dargestellt, so dass in einem ersten Montageschritt das Befestigungselement 52 der Zierblende 10 lösbar in der Naben- oder Mittenbohrung 36 verrastet werden kann, wie in Fig. 12 dargestellt. Dabei wird der Rastteil 54 in die Naben- oder Mittenbohrung 36 gedrückt, bis die hintere Stirnfläche 60 des Gewindeteils 56 gegen den Mündungsrand der Naben- oder Mittenbohrung 36 anschlägt und die Vorsprünge 66 aller Rastzungen 62 in die Nut 40 eingerastet sind.

Wie ebenfalls in Fig. 12 dargestellt, wird dann in einem zweiten Montageschritt das Außengewinde 86 des Gewindebolzens 84 des Blendenelements 50 mit dem Innengewinde 70 im Gewindeteil 56 des in der Naben- oder Mittenbohrung 36 verrasteten Befestigungselements 52 in Gewindeeingriff gebracht. Der Gewindebolzen 84 wird dann durch Drehen des Blendenelements 50 um die Drehachse 78 in das Innengewinde 70 eingeschraubt, bis der Verblendungsteil 76 des Blendenelements 50 im Bereich der Speichen 26 des Rades 12 gegen dessen Sicht- oder Außenseite 18 anschlägt, wie in Fig. 13 dargestellt.

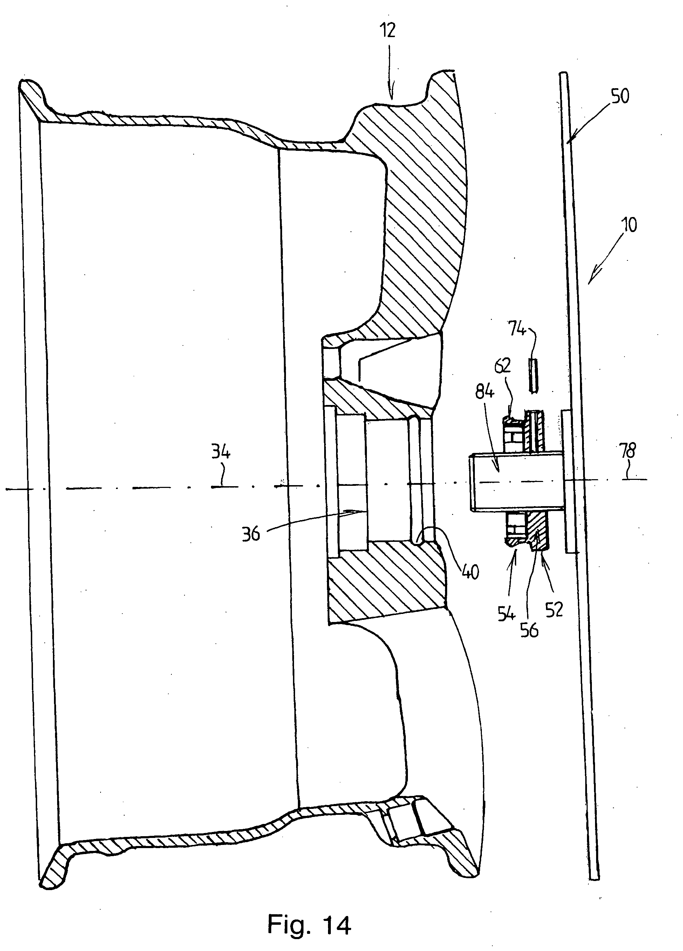

In einem dritten Montageschritt wird dann die gesamte Zierblende 10, bestehend aus dem Befestigungselement 52 und dem lösbar damit verschraubten Blendenelement 50, unter Lösen der Verrastung des Rastteils 54 in der Naben- oder Mittenbohrung 36 vom Rad 12 abgenommen, wie in Fig. 14 dargestellt, und zwar ohne dass dabei das Blendenelement 50 in Bezug zum Befestigungselement 52 um die Drehachse 58 bzw. 70 der zuvor hergestellten Schraubverbindung verdreht wird. Zu diesem Zweck kann das Blendenelement 50 beispielsweise im Bereich der Schlitzöffnungen 82 und/oder seines äußeren Umfangs ergriffen und durch Ausüben einer axialen Zugkraft von der Sicht- oder Außenseite 18 des Rades 12 weg bewegt werden.

Wie ebenfalls in Fig. 14 dargestellt, wird dann in einem vierten Montageschritt die Schraubverbindung zwischen dem Blendenelement 50 und dem Befestigungselement 52 blockiert, indem die Madenschraube 74 beispielsweise mit Hilfe eines Innensechskantschlüssels in die Gewindebohrung 72 des Gewindeteils 56 eingeschraubt wird, bis ihr konisches inneres Ende in die Durchgangsbohrung 68 ragt und dort gegen den Gewindebolzen 84 angepresst wird bzw. sich etwas in diesen eindrückt.

In einem fünften und letzten Montageschritt wird dann die Zierblende 10 wieder lösbar am Rad 12 befestigt, indem das nunmehr drehfest mit dem Blendenelement 50 verbundene Befestigungselement 52 erneut in der Naben- oder Mittenbohrung 36 verrastet wird, wie zuvor unter Bezugnahme auf Fig. 12 beschrieben wurde. Dabei werden die Schlitzöffnungen 82 des Blendenelements 50 durch Drehen um die Drehachse 78 so ausgerichtet, dass sie nach dem Verrasten vor den Öffnungen 28 zwischen den Speichen 26 des Radsterns 16 zu liegen kommen, wie in Fig. 3 dargestellt.

## Patentansprüche

1. Zierblende (10) für ein Kraftfahrzeugrad (12) mit einer Drehachse (34) und einer an einer Sicht- oder Außenseite (18) des Rades (12) mündenden, zur Drehachse (34) koaxialen Naben- oder Mittenbohrung (36), mit einem Blendenelement (50), das einen überwiegenden Teil der Sicht- oder Außenseite (18) des Rades (12) bedeckt, sowie mit einem Befestigungselement (52) zur Befestigung des Blendenelements (50) am Rad (12), das mit Rastmitteln (62) zum lösbaren Verrasten innerhalb der Naben- oder Mittenbohrung (36) versehen ist, **dadurch gekennzeichnet, dass** das Befestigungselement (52) mit einem zur Drehachse (34) des Rades (12) koaxialen Gewinde (70) versehen ist und dass das Blendenelement (50) an seiner der Sicht- oder Außenseite (18) des Rades (12) gegenüberliegenden Innenseite mit einem zum Gewinde (70) des Befestigungselements (52) komplementären Gewinde (86) versehen ist.

2. Zierblende (10) nach Anspruch 1, **dadurch gekennzeichnet, dass** das Blendenelement (50) eine geschlossene äußere Oberfläche aufweist, die sich von der Drehachse (34) aus über mindestens drei Viertel des Radius eines Felgenhorns (24) des Rades (12) nach außen erstreckt.

3. Zierblende (10) nach Anspruch 1 oder 2, **gekennzeichnet durch** Mittel (72, 74) zum Blockieren der miteinander verschraubten Gewinde (70, 84) in Bezug zueinander.

4. Zierblende (10) nach einem der vorangehenden Ansprüche, **dadurch gekennzeichnet, dass** das Blendenelement (50) mit einem Außengewinde (86) und das Befestigungselement (52) mit einem Innengewinde (70) versehen ist, oder umgekehrt.

5. Zierblende (10) nach Anspruch 4, **dadurch gekennzeichnet, dass** die Mittel (72, 74) zum Blockieren der miteinander verschraubten Gewinde (70, 86) eine Schraube (74) umfassen, die von außen her in eine am Innengewinde (70) mündende Gewindebohrung (72) eingeschraubt wird.

6. Zierblende (10) nach einem der vorangehenden Ansprüche, **dadurch gekennzeichnet, dass** das Blendenelement (50) einen dünnen scheiben- oder muldenförmigen Verblendungsteil (76) und einen drehfest mit dem Verblendungsteil (76) verbundenen Gewindeteil (80) mit dem Gewinde (86) aufweist.

7. Zierblende nach Anspruch 6, **dadurch gekennzeichnet, dass** der Verblendungsteil (76) durch Spritzgießen einstückig mit dem vorgefertigten Gewindeteil (80) verbunden ist.

8. Zierblende nach Anspruch 7, **dadurch gekennzeichnet, dass** der Gewindeteil (80) einen flachen Fußteil (88) mit mehreren axialen Durchgangsbohrungen (90) besitzt, die mit dem thermoplastischen Kunststoff des Verblendungsteils (76) gefüllt sind.

9. Zierblende (10) nach einem der vorangehenden Ansprüche, **dadurch gekennzeichnet, dass** das Blendenelement (50) an seiner Innenseite einen mittig überstehenden starren Gewindebolzen (84) aufweist, an dem eines der Gewinde (70, 86) als Außengewinde (86) ausgebildet ist, und dass das Befestigungselement (52) eine Bohrung (68) aufweist, in der das andere der Gewinde (70, 86) als Innengewinde (70) ausgebildet ist.

10. Zierblende (10) nach einem der vorangehenden Ansprüche, **dadurch gekennzeichnet, dass** das Befestigungselement (52) einen in die Naben- oder Mittenbohrung (36) des Rades (12) einführbaren, mit den Rastmitteln (62) versehenen Rastteil (54) und einen gegen die Sicht- oder Außenseite (18) des Rades (12) anliegenden, mit dem Gewinde (70) versehenen Gewindeteil (56) aufweist.

11. Zierblende (10) nach einem der vorangehenden Ansprüche, **dadurch gekennzeichnet, dass** die Rastmittel eine Mehrzahl von elastisch verformbaren Rastzungen (62) umfassen, die eine Längsachse (58) des Gewindes (70) konzentrisch umgeben.

12. Zierblende (10) nach einem der vorangehenden Ansprüche, **dadurch gekennzeichnet, dass** das Blendenelement (50) an seiner Außenseite mit einem Aufdruck versehen oder mit einer bedruckten Folie überzogen ist.

13. Verfahren zur Befestigung einer Zierblende (10) an einem Kraftfahrzeugrad (12) mit einer Drehachse (34) und einer an einer Sicht- oder Außenseite (18) des Rades (12) mündenden, zur Drehachse (34) koaxialen Naben- oder Mittenbohrung (36), wobei in einem ersten Schritt ein Befestigungselement (52) der Zierblende (10) lösbar in der Naben- oder Mittenbohrung (36) verrastet wird, **dadurch gekennzeichnet, dass** in einem zweiten Schritt ein Gewinde (86) eines Blendenelements (50) der Zierblende (10) mit einem komplementären Gewinde (70) des verrasteten Befestigungselements (52) verschraubt wird, bis das Blendenelement (50) gegen die Sicht- oder Außenseite (18) des Rades anschlägt, dass in einem dritten Schritt das Blendenelement (50) und das Befestigungselement (52) unter Lösen der Verrastung gemeinsam vom Rad (12) abgenommen werden, dass in einem vierten Schritt das Befestigungselement (52) und das Blendenelement (50) durch Blockieren der beiden Gewinde (86, 70) drehfest miteinander verbunden werden und dass in einem fünften Schritt das Befestigungselement (52) wieder lösbar in der Naben- oder Mittenbohrung (36) verrastet wird.

14. Verfahren nach Anspruch 13, **dadurch gekennzeichnet, dass** die beiden Gewinde (86, 70) mittels einer Schraube (74) blockiert werden, die von außen her in eine am Innengewinde (70) mündende Gewindebohrung (72) eingeschraubt wird.

15. Verfahren nach Anspruch 13 oder 14, **dadurch gekennzeichnet, dass** das Blendenelement (50) und das Befestigungselement (52) beim gemeinsamen Abnehmen vom Rad (12) nicht gegeneinander verdreht werden.

## Claims

1. Decorative cover (10) for a motor vehicle wheel (12) with an axis of rotation (34) and a hub bore or centre bore (36) which opens out on a visible side or outer side (18) of the wheel (12) and is coaxial with respect to the axis of rotation (34), with a cover element (50) which covers a predominant part of the visible side or outer side (18) of the wheel (12), and with a fastening element (52) for fastening the cover element (50) to the wheel (12), said fastening element being provided with latching means (62) for releasable latching within the hub bore or centre bore (36), **characterized in that** the fastening element (52) is provided with a thread (70) which is coaxial with respect to the axis of rotation (34) of the wheel (12), and **in that** the cover element (50) is provided on its inner side, which is opposite the visible side or outer side (18) of the wheel (12), with a thread (86) which is complementary to the thread (70) of the fastening element (52).

2. Decorative cover (10) according to Claim 1, **characterized in that** the cover element (50) has a closed outer surface which extends outwards from the axis of rotation (34) over at least three quarters of the radius of a rim flange (24) of the wheel (12).

3. Decorative cover (10) according to Claim 1 or 2, **characterized by** means (72, 74) for blocking the screwed-together threads (70, 86) with respect to each other.

4. Decorative cover (10) according to one of the preceding claims, **characterized in that** the cover element (50) is provided with an external thread (86) and the fastening element (52) is provided with an internal thread (70), or vice versa.

5. Decorative cover (10) according to Claim 4, **characterized in that** the means (72, 74) for blocking the screwed-together threads (70, 86) comprise a screw (74) which is screwed from the outside into a threaded bore (72) opening out at the internal thread (70).

6. Decorative cover (10) according to one of the preceding claims, **characterized in that** the cover element (50) has a thin disc- or trough-shaped facing part (76) and a threaded part (80) with the thread (86), said threaded part (80) being connected to the facing part (76) for rotation therewith.

7. Decorative cover according to Claim 6, **characterized in that** the facing part (76) is integrally connected to the premanufactured threaded part (80) by injection moulding.

8. Decorative cover according to Claim 7, **characterized in that** the threaded part (80) has a flat foot part (88) having a plurality of axial through bores (90) which are filled with the thermoplastic of the facing part (76).

9. Decorative cover (10) according to one of the preceding claims, **characterized in that** the inner side of the cover element (50) has a rigid threaded bolt (84) which protrudes centrally and on which one of the threads (70, 86) is formed as an external thread (86), and **in that** the fastening element (52) has a bore (68) in which the other of the threads (70, 86) is formed as an internal thread (70).

10. Decorative cover (10) according to one of the preceding claims, **characterized in that** the fastening element (52) has a latching part (54) which is introducible into the hub bore or centre bore (36) of the wheel (12) and is provided with the latching means (62), and a threaded part (56) which lies against the visible side or outer side (18) of the wheel (12) and is provided with the thread (70).

11. Decorative cover (10) according to one of the preceding claims, **characterized in that** the latching means comprise a plurality of elastically deformable latching tongues (62) which concentrically surround a longitudinal axis (58) of the thread (70).

12. Decorative cover (10) according to one of the preceding claims, **characterized in that** the outer side of the cover element (50) is provided with an imprint or is covered with a printed film.

13. Method for fastening a decorative cover (10) to a motor vehicle wheel (12) with an axis of rotation (34) and a hub bore or centre bore (36) which opens out on a visible side or outer side (18) of the wheel (12) and is coaxial with respect to the axis of rotation (34), wherein, in a first step, a fastening element (52) of the decorative cover (10) is latched releasably in the hub bore or centre bore (36), **characterized in that**, in a second step, a thread (86) of a cover element (50) of the decorative cover (10) is screwed to a complementary thread (70) of the latched fastening element (52) until the cover element (50) strikes against the visible side or outer side (18) of the wheel, **in that**, in a third step, the cover element (50) and the fastening element (52) are jointly removed from the wheel (12) by releasing the latching, **in that**, in a fourth step, the fastening element (52) and the cover element (50) are connected to each other for conjoint rotation by blocking the two threads (86, 70), and **in that**, in a fifth step, the fastening element (52) is latched releasably again in the hub bore or centre bore (36).

14. Method according to Claim 13, **characterized in that** the two threads (86, 70) are blocked by means of a screw (74) which is screwed from the outside into a threaded bore (72) opening out at the internal thread (70).

15. Method according to Claim 13 or 14, **characterized in that** the cover element (50) and the fastening element (52) are not rotated in relation to each other when being jointly removed from the wheel (12) .

## Revendications

1. Enjoliveur (10) pour une roue de véhicule automobile (12) avec un axe de rotation (34) et un alésage de moyeu ou alésage central (36) débouchant au niveau d'un côté visible ou côté extérieur (18) de la roue (12), coaxial à l'axe de rotation (34), avec un élément de moulure d'enjoliveur (50) qui recouvre une majeure partie du côté visible ou côté extérieur (18) de la roue (12), et avec un élément de fixation (52) pour la fixation de l'élément de moulure d'enjoliveur (50) à la roue (12), lequel est pourvu de moyens d'encliquetage (62) pour l'encliquetage amovible à l'intérieur de l'alésage de moyeu ou alésage central (36), **caractérisé en ce que** l'élément de fixation (52) est pourvu d'un filetage (70) coaxial à l'axe de rotation (34) de la roue (12) et **en ce que** l'élément de moulure d'enjoliveur (50) est pourvu, au niveau de son côté intérieur opposé au côté visible ou côté extérieur (18) de la roue (12), d'un filetage (86) complémentaire au filetage (70) de l'élément de fixation (52).

2. Enjoliveur (10) selon la revendication 1, **caractérisé en ce que** l'élément de moulure d'enjoliveur (50) présente une surface extérieure fermée, qui s'étend vers l'extérieur à partir de l'axe de rotation (34) sur au moins trois quarts du rayon d'un rebord de jante (24) de la roue (12) .

3. Enjoliveur (10) selon la revendication 1 ou 2, **caractérisé par** des moyens (72, 74) pour bloquer l'un par rapport à l'autre les filetages vissés ensemble (70, 86).

4. Enjoliveur (10) selon l'une quelconque des revendications précédentes, **caractérisé en ce que** l'élément de moulure d'enjoliveur (50) est pourvu d'un filetage extérieur (86) et l'élément de fixation (52) est pourvu d'un filetage intérieur (70), ou inversement.

5. Enjoliveur (10) selon la revendication 4, **caractérisé en ce que** les moyens (72, 74) pour bloquer les filetages vissés ensemble (70, 86) comprennent une vis (74) qui est vissée depuis l'extérieur dans un alésage fileté (72) débouchant au niveau du filetage intérieur (70).

6. Enjoliveur (10) selon l'une quelconque des revendications précédentes, **caractérisé en ce que** l'élément de moulure d'enjoliveur (50) présente une partie de garniture (76) mince en forme de disque ou de creux et une partie filetée (80) avec le filetage (86), connectée de manière solidaire en rotation à la partie de garniture (76).

7. Enjoliveur selon la revendication 6, **caractérisé en ce que** la partie de garniture (76) est connectée d'une seule pièce par moulage par injection à la partie filetée préfabriquée (80).

8. Enjoliveur selon la revendication 7, **caractérisé en ce que** la partie filetée (80) présente une partie de pied plate (88) avec plusieurs alésages traversants axiaux (90), qui sont remplis avec le plastique thermoplastique de la partie de garniture (76).

9. Enjoliveur (10) selon l'une quelconque des revendications précédentes, **caractérisé en ce que** l'élément de moulure d'enjoliveur (50) présente au niveau de son côté intérieur, un boulon fileté rigide (84) faisant saillie centralement, au niveau duquel est réalisé l'un des filetages (70, 86) sous forme de filetage extérieur (86), et **en ce que** l'élément de fixation (52) présente un alésage (68) dans lequel est réalisé l'autre des filetages (70, 86) en tant que filetage intérieur (70) .

10. Enjoliveur (10) selon l'une quelconque des revendications précédentes, **caractérisé en ce que** l'élément de fixation (52) présente une partie d'encliquetage (54) pouvant être introduite dans l'alésage de moyeu ou alésage central (36) de la roue (12), pourvue des moyens d'encliquetage (62), et une partie filetée (56) s'appliquant contre le côté visible ou côté extérieur (18) de la roue (12), pourvue du filetage (70).

11. Enjoliveur (10) selon l'une quelconque des revendications précédentes, **caractérisé en ce que** les moyens d'encliquetage comprennent une pluralité de langues d'encliquetage déformables élastiquement (62) qui entourent concentriquement un axe longitudinal (58) du filetage (70).

12. Enjoliveur (10) selon l'une quelconque des revendications précédentes, **caractérisé en ce que** l'élément de moulure d'enjoliveur (50) est pourvu d'une impression au niveau de son côté extérieur ou est revêtu d'un film imprimé.

13. Procédé de fixation d'un enjoliveur (10) sur une roue de véhicule automobile (12) avec un axe de rotation (34) et un alésage de moyeu ou alésage central (36) débouchant au niveau d'un côté visible ou côté extérieur (18) de la roue (12), coaxial à l'axe de rotation (34), dans lequel, dans une première étape, un élément de fixation (52) de l'enjoliveur (10) est encliqueté de manière amovible dans l'alésage de moyeu ou alésage central (36), **caractérisé en ce que** dans une deuxième étape, un filetage (86) d'un élément de moulure d'enjoliveur (50) de l'enjoliveur (10) est vissé avec un filetage complémentaire (70) de l'élément de fixation encliqueté (52) jusqu'à ce que l'élément de moulure d'enjoliveur (50) s'applique contre le côté visible ou côté extérieur (18) de la roue, **en ce que** dans une troisième étape, l'élément de moulure d'enjoliveur (50) et l'élément de fixation (52) sont enlevés ensemble de la roue (12) en desserrant l'encliquetage, **en ce que** dans une quatrième étape, l'élément de fixation (52) et l'élément de moulure d'enjoliveur (50) sont connectés l'un à l'autre de manière solidaire en rotation par blocage des deux filetages (86, 70) et **en ce que** dans une cinquième étape, l'élément de fixation (52) est à nouveau encliqueté de manière amovible dans l'alésage de moyeu ou alésage central (36).

14. Procédé selon la revendication 13, **caractérisé en ce que** les deux filetages (86, 70) sont bloqués au moyen d'une vis (74) qui est vissée depuis l'extérieur dans un alésage fileté (72) débouchant au niveau du filetage intérieur (70).

15. Procédé selon la revendication 13 ou 14, **caractérisé en ce que** l'élément de moulure d'enjoliveur (50) et l'élément de fixation (52) ne sont pas tournés l'un par rapport à l'autre lorsqu'ils sont enlevés ensemble de la roue (12).
